# EUROPÄISCHE PATENTANMELDUNG

(11) **EP 1 736 386 A2**
(43) Veröffentlichungstag der Anmeldung: **27.12.2006**
(21) Anmeldenummer: 06005840.1
(22) Anmeldetag: 22.03.2006
(51) Int. Cl.: B60S 1/36, B60S 1/34

(54) **Scheibenwischer mit zwei überlagerten Wischbewegungen**

(30) Priorität: 22.03.2005 DE 102005013178
(71) Anmelder: Obstfelder, Sigrid, 69250 Schönau (DE); Mierswa, Klaus, 68199 Mannheim (DE)
(72) Erfinder: Obstfelder, Günther, 68250 Schönau (DE)
(74) Vertreter: Mierswa, Klaus

(57) **Zusammenfassung**

Die Erfindung betrifft einen Scheibenwischer mit zwei überlagerten Wischbewegungen, bestehend aus einem Wischerarm, welcher an einem Ende mit einem motorischen Antrieb (2) verbunden ist, welcher dem Wischerarm (1) eine hin- und hergehende oder rotatorische oder elliptische oder sonstwie zyklische erste Bewegung aufprägt und mit einem Haltegestänge, weiches am anderen Ende des Wischerarms (1) beweglich befestigt ist und ein Wischblatt (4) trägt, welches eine zusätzliche zweite Bewegung ausführt. Der Wischerarm (1) besteht aus einer unteren, mit dem motorischen Antrieb verbundene Stange (1) und einer oberen, das Haltegestänge mit Wischblatt (4) tragende Stange (3), wobei die einander benachbarten Enden der Stangen (1,3) in einem Verbindungsglied (5) gehaltert sind, welches einerseits fest mit dem Ende der unteren Stange (1) verbunden ist und andererseits das Ende der oberen Stange (3) beweglich haltert, wobei das Verbindungsglied (5) die Bewegung der unteren Stange (1) auf die obere Stange (3) zu übertragen imstande ist, erste Bewegung des Wischblattes (4), und das Verbindungsglied (5) eine Antriebseinheit (7) aufweist, welche gleichzeitig der oberen Stange (3) eine im Wesentlichen vor und zurück verlaufende zweite Bewegung, Longitudinalbewegung des Wischblattes (4), aufzuprägen imstande ist, welche beiden Bewegungen sich überlagern, jedoch voneinander unabhängig sind.

## Beschreibung

### Technisches Gebiet:

Die Erfindung betrifft einen Scheibenwischer mit zwei überlagerten Wischbewegungen, bestehend aus wenigstens einem Wischerarm, welcher an einem Ende mit einem motorischen Antrieb verbunden ist, welcher dem Wischerarm eine im Wesentlichen hin- und hergehende oder rotatorische oder elliptische oder sonstwie zyklische erste Bewegung aufprägt und mit wenigstens einem Haltegestänge, welches am anderen Ende des Wischerarms beweglich befestigt ist und wenigstens ein Wischblatt trägt, welches eine zusätzliche zweite Bewegung ausführt, gemäß dem Oberbegriff des Anspruchs 1.

### Stand der Technik:

Scheibenwischer, insbesondere für Automobile, des Standes der Technik, werden gewöhnlich in hin und her wischender Bewegung auf einer Teilkreisbahn bewegt. Ebenso ist es bekannt, dieser Teilkreisbahn eine teilelliptische oder teilparabolische Ablenkung aufzuprägen. Bei verschmutzten Scheiben oder bei einer Beschädigung der Gummilippe des Wischerblattes tritt dadurch beim Wischen ein Schmiereffekt auf, weil jeder Punkt der Gummilippe des Wischblattes bei seiner hin und her gehenden Bewegung immer dieselbe Wischbahn durchfährt unabhängig davon, wie diese gekrümmt ist. Dieser Schmiereffekt kann meistens erst nach längerem Wischen und nur unter Einsatz der Scheibenwaschanlage beseitigt werden.

Zur Vermeidung dieses Schmiereffektes auf der Scheibe sind eine Vielzahl von Scheibenwischern bekannt geworden, bei denen die Wischblätter zwei einander überlagerte Bewegungen ausführen, welche Bewegungen jedoch zwangsweise voneinander abgeleitet und dadurch miteinander gekoppelt sind. Nach einer vorgegebenen Anzahl von Wischvorgängen wird auch in diesem Fall wiederum dieselbe Wischbahn durchfahren und dadurch der Effekt der Verschmierung der Scheibe nicht vermieden, sondern höchstens herabgesetzt. Solche Vorrichtungen sind aus den Dokumenten US 4 878 398, 4 683 605, 4 720 885 oder 5 469 595 bekannt. Durch die WO 0071397 A1 ist es bekannt, zwei Arten von Wischern auf einer Scheibe zu benützen, nämlich einen Wischer, welcher einerseits nur eine hin und hergehende Bewegung ausführt, und einen zweiten Wischer, dessen Wischblatt andererseits eine volle kreisförmige Wischbewegung ausführt. Derartige Scheibenwischer haben eine unbefriedigende Wischleisturtg, insbesondere dauert das Sauberwischen einer verschmierten Scheibe eine gewisse Zeit, in welcher eine erheblich erhöhte Unfallgefahr für den Fahrer wegen Sichtbehinderung gegeben ist.

### Technische Aufgabe.

Der Erfindung liegt die technische Aufgabe zugrunde, einen Scheibenwischer der eingangs genannten Gattung zu schaffen, welcher bei verschmutzter Scheibe in kürzester Zeit eine Reinigung der Scheibe zu bewirken imstande sein soll, so dass eine Unfallgefahr aufgrund behinderter Sicht durch die Scheibe auf ein Minimum begrenzt ist und welcher eine erheblich erhöhte Wischleistung gegenüber Scheibenwischern des Standes der Technik aufweisen soll.

### Offenbarung der Erfindung sowie der Vorteile:

Die Lösung der Aufgabe besteht bei einem Scheibenwischer der eingangs genannten Gattung darin, dass der Wischerarm aus einer untere, mit dem motorischen Antrieb verbundene Stange und einer oberen, das Haltegestänge mit Wischblatt tragende Stange besteht, wobei die einander benachbarten Enden der Stangen in einem Verbindungsglied gehaltert sind, welches einerseits fest mit dem Ende der unteren Stange verbunden ist und andererseits das Ende der oberen Stange beweglich haltert, wobei das Verbindungsglied die Bewegung der unteren Stange auf die obere Stange zu übertragen imstande ist, erste Bewegung des Wischblattes, und das Verbindungsglied eine Antriebseinheit aufweist, welche gleichzeitig der oberen Stange eine im Wesentlichen vor und zurück verlaufende zweite Bewegung aufzuprägen imstande ist, welche beiden Bewegungen sich überlagern, jedoch voneinander unabhängig sind.

Dabei ist In vorteilhafter weiterer Ausgestaltung der Erfindung die zweite Bewegung der oberen Stange und somit auch des Wischblatts eine Longitudinalbewegung, deren translatorischer Weg gleich oder kleiner als die Breite der im Betrieb des Scheibenwischers hin und her kippenden Gummilippe des Wischblattes.

In weiterer erfindungsgemäßer Ausgestaltung des Scheibenwischers ist die Amplitude und/oder die Frequenz der zweiten Bewegung, Longitudinalbewegung, veränderbar, zum Beispiel steuerbar oder regelbar. Damit kann vorteilhaft die Amplitude der oberen Stange und gleichzeitig damit oder auch unabhängig voneinander die Frequenz der Longitudinalbewegung der oberen Stange und damit des Wischerblattes verändert werden.

Gegenüber dem Stand der Technik besteht der hervorstechende Vorteil des erfindungsgemäßen Scheibenwischers darin, dass dieser eine erheblich erhöhte Wischerleistung aufweist, welche dazu noch gesteuert oder geregelt werden kann durch die Veränderung der Amplitude und/oder der Frequenz. Das Produkt aus Amplitude und Frequenz der oberen, das Wischerblatt tragende Stange stellt die zusätzliche Wischerleistung des erfindungsgemäßen Scheibenwischers gegenüber herkömmlichen Scheibenwischern dar. Dadurch ist der erfindungsgemäße Scheibenwischer imstande, bei verschmutzter Scheibe in kürzester Zeit eine Reinigung der Scheibe zu bewirken, ohne dass eine Streifenbildung entstehen kann, so dass eine Unfallgefahr aufgrund behinderter Sicht durch die Scheibe, wie das beim Stand der Technik gewöhnlich der Fall ist, auf ein Minimum begrenzt ist. Wenn beispielsweise die Gummilippe des Wischerblattes beschädigt ist und Abrisse aufweist, so können diese Beschädigungen des Wischerblattes keine Streifen mehr ausbilden, weil diese Stellen aufgrund der zusätzlichen Bewegung der oberen Stange mit der Frequenz und der Amplitude derselben ständig überfahren werden.

In weiterer erfindungsgemäßer Ausgestaltung des Scheibenwischers weist die Antriebseinheit des Verbindungsgliedes wenigstens einen Piezokristall auf, welcher durch Zuführen von elektrischer Energie mechanische Schwingungen auszuführen imstande ist, welche als zweite Bewegung auf die obere Stange übertragbar sind. Die mechanischen Schwingungen des Piezokristalls werden somit als zweite Bewegung auf die obere Stange übertragen. Die Antriebseinheit des Verbindungsgliedes kann hierzu eine Mehrzahl von hintereinander bzw. in Reihe geschalteten, elektrisch zu mechanischen Schwingungen anregbare Piezokristalle aufweisen, welche ihre mechanischen Schwingungen als zweite Bewegung auf die obere Stange übertragen.

In weiterer erfindungsgemäßer Ausgestaltung des Scheibenwischers ist die Antriebseinheit eine von einer Wechselspannung beaufschlagte Spule, welche die obere Stange in die zweite hin und her gehende Bewegung versetzt. Des Weiteren kann die Spule Teil eines elektromagnetischen Schwingkreises sein, dessen erzwungene elektrische Schwingungen entweder unterhalb oder oberhalb der Resonanzfrequenz des Schwingkreises liegen.

In weiterer erfindungsgemäßer Ausgestaltung des Scheibenwischers ist die Antriebseinheit ein Masse-Federsystem, welches durch die erste Bewegung in Schwingungen versetzt wird und diese Schwingungen als die zweite Bewegung hin und her gehende auf die obere Stange überträgt. Dabei kann die obere Stange mitsamt dem Haltegestänge und dem Wischblatt Teil des Masse-Federsystems sein, wobei dasselbe vorzugsweise in der Resonanzfrequenz des Masse-Federsystems schwingt.

In weiterer erfindungsgemäßer Ausgestaltung des Scheibenwischers weist die Antriebseinheit des Verbindungsgliedes eine Exzenterscheibe mit einem eigenen Motor auf, welche Exzenterscheibe die obere Stange in die zweite im Wesentlichen hin und her gehende Bewegung zu versetzen imstande ist.

In weiterer erfindungsgemäßer Ausgestaltung des Scheibenwischers besteht die Antriebseinheit des Verbindungsgliedes aus einer Kombination aus einem Masse-Federsystem und einer mit einer Wechselspannung beaufschlagten Spule.

Ein Verfahren zur Bewegung eines Scheibenwischers mittels zweier überlagerter Wischbewegungen, unter Verwendung wenigstens eines Wischerarmes, welcher an einem Ende mit einem motorischen Antrieb verbunden ist, welcher dem Wischerarm eine im Wesentlichen hin- und hergehende oder rotatorische oder elliptische oder sonstwie zyklische erste Bewegung aufprägt und wenigstens eines Haltegestänges, welches am anderen Ende des Wischerarms beweglich befestigt ist und wenigstens ein Wischblatt trägt, welches eine zusätzliche zweite Bewegung ausführt, ist dadurch gekennzeichnet, dass der Wischerarm aus einer unteren, mit dem motorischen Antrieb verbundene Stange und einer oberen, das Haltegestänge mit Wischblatt tragende Stange besteht, wobei die einander benachbarten Enden der Stangen in einem Verbindungsglied gehaltert sind, welches einerseits fest mit dem Ende der unteren Stange verbunden ist und andererseits das Ende der oberen Stange beweglich haltert, wobei das Verbindungsglied die Bewegung der unteren Stange auf die obere Stange überträgt, erste Bewegung des Wischblattes, und das Verbindungsglied eine Antriebseinheit aufweist, welche gleichzeitig der oberen Stange eine im Wesentlichen vor und zurück verlaufende zweite Bewegung, Longitudinalbewegung des Wischblattes, aufprägt, welche beiden Bewegungen sich überlagern, aber unabhängig voneinander ausgeführt werden.

In weiterer erfindungsgemäßer Ausgestaltung des Scheibenwischers beträgt der translatorische Weg der oberen Stange und somit des Wischerblattes bis zu 5 mm, vorzugsweise bis zu 2 mm, insbesondere bis zu 1 mm.

### Kurzbeschreibung der Zeichnung, in der zeigen:

- Figur 1: eine prinzipielle Ausgestaltung des erfindungsgemäßen Scheibenwischers
- Figur 2: I-IV eine Darstellung der Wirkungsweise eines herkömmlichen Scheibenwischers des Standes der Technik und
- Figur 3: A-D die Wirkungsweise des erfindungsgemäßen Scheibenwischers.

### Wege zur Ausführung der Erfindung:

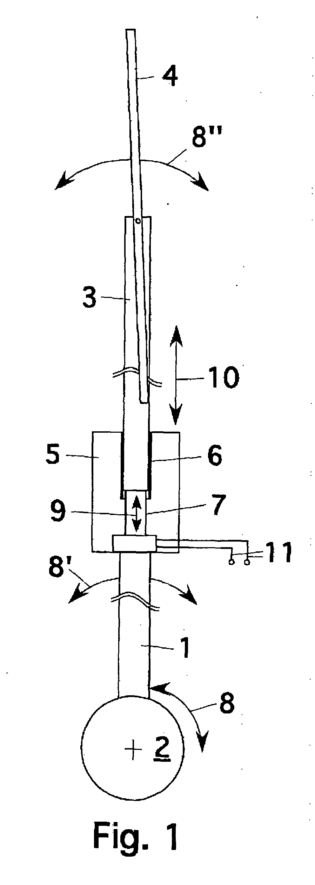

Gemäß der Figur 1 besteht die prinzipielle Ausgestaltung des erfindungsgemäßen Scheibenwischers gemäß der eingangs genannten Gattung aus einem Wischerarm, welcher in eine untere Stange 1 und eine obere Stange 3 geteilt ist. Die untere Stange 1 ist fest mit einem motorischen Antrieb 2 verbunden, welcher der unteren Stange 1 eine zum Beispiel teilkreisförmige Bewegung aufprägt, was durch die Doppelpfeile 8 und 8' angedeutet ist. Auf dem oberen Ende der unteren Stange 1 sitzt ein Verbindungsglied 5, welches fest mit der unteren Stange 1 verbunden ist. Das Verbindungsglied 5 weist innen zentrisch eine Hülse 6 auf, in welche von oben die obere Stange 3 in Längsrichtung bzw. in Richtung der Längsachse des Wischerarmes frei beweglich, aber durch die Hülse 6 geführt, eintaucht. Am oberen Ende der oberen Stange 3 ist ein Haltegestänge 4 mit Wischblatt angeordnet. Das Verbindungsglied 5 mitsamt der Hülse 6 übertragen die teilkreisförmige Bewegung der unteren Stange 1 auf die obere Stange 3, so dass sich auch die obere Stange 3 gemäß dem Doppelpfeil 8" auf einer teilkreisförmigen Bahn auf der Scheibe (nicht dargestellt) zu bewegen imstande ist, was die erste Bewegung des Haltegestänges 4 und des Wischblattes darstellt.

Das untere Ende der oberen Stange 3 stützt sich auf eine Antriebseinheit 7 innerhalb des Verbindungsgliedes 5 ab und steht mit dieser in fester Verbindung. Die Antriebseinheit besteht beispielsweise aus einer Mehrzahl von hintereinander bzw. in Reihe geschalteten, elektrisch zu mechanischen Schwingungen anregbare Piezokristalle 7, welche sich auf dem boden des Verbindungsgliedes 5 abstützen. Über Zuleitungen 11 wird den Piezokristallen elektrische Energie zugeführt, die die Piezokristalle in mechanische Schwingungen versetzt, welche hier Longitudinalschwingungen vor und zurück in Richtung der Längsachse des Wischerarmes sind, was durch den Doppelpfeil 9 angedeutet ist. Da die obere Stange 3 innerhalb der Hülse 6 des Verbindungsgliedes 5 in Längsrichtung, also in Richtung der Doppelpfeile 7, 10, frei beweglich, aber geführt ist, werden diese Longitudinalschwingungen als zweite Bewegung auf die obere Stange 3 übertragen und zwar gemäß einer vorgebbaren Amplitude und/oder einer vorgebbaren Frequenz. Diese Longitudinalschwingung - in Richtung der Doppelpfeile 7, 10 - stellt die zweite Bewegung des Haltegestänges 4 und des Wischblattes dar und überlagert sich der ersten Bewegung. Des Weiteren ist ersichtlich, dass diese zweite Bewegung von der ersten Bewegung im gezeigten Beispiel unabhängig ist.

Somit überträgt das Verbindungsglied 5 die Bewegung 8, 8' der unteren Stange 1 auf die obere Stange 3 als Bewegung 8", welche die erste Bewegung des Wischblattes 4 darstellt. Die Antriebseinheit 7 des Verbindungsgliedes 5 ist imstande, gleichzeitig der oberen Stange 3 eine im Wesentlichen vor und zurück verlaufende zweite Bewegung 7, 10 aufzuprägen, welche beiden Bewegungen sich überlagern, jedoch voneinander unabhängig sind.

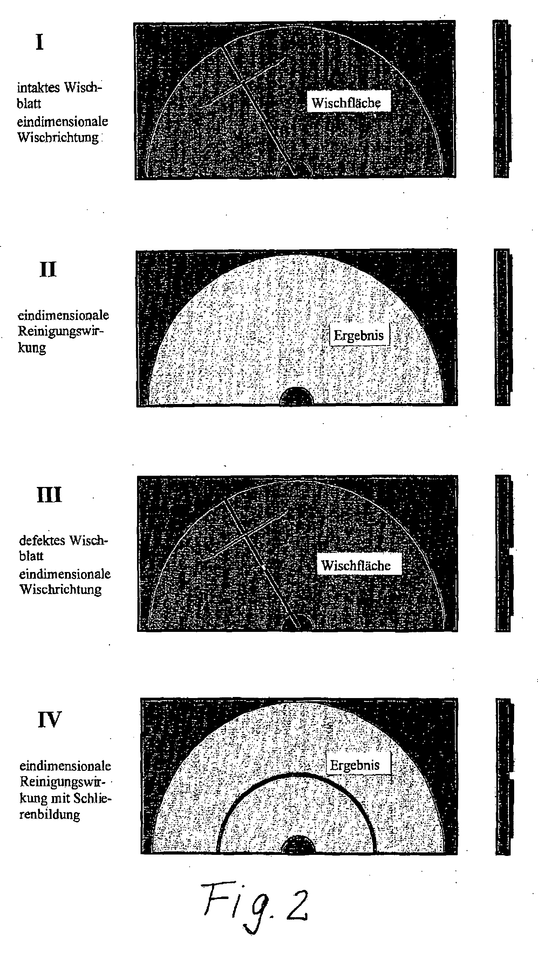

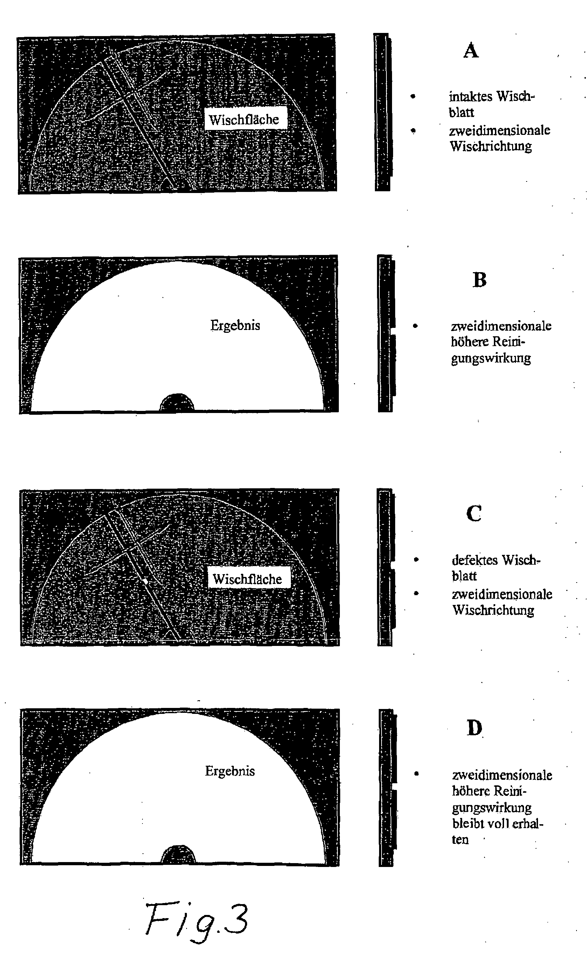

Die Wirkungsweise des erfindungsgemäßen Scheibenwischers gegenüber dem Stand der Technik ist in den Figuren 2 I bis IV, Stand der Technik, und den Figuren 3 A bis D, erfindungsgemäßer Scheibenwischer, dargestellt.

Ein intaktes Wischerblatt des Standes der Technik mit eindimensionaler Wischrichtung vor einer Frontscheibe beispielsweise eines Kraftfahrzeugs ist in den Figuren 21 und 2II gezeigt. Bei starker Verschmutzung der Frontscheibe dauert es eine Welle, bis die Frontscheibe durch die eindimensionale Wischrichtung des Wischerblattes aufgrund eindimensionaler Reinigungswirkung in etwa sauber ist. Wenn das Wischblatt einen Defekt aufweist, wie es in Figur 2III gezeigt ist, so bilden sich Schlieren, wie in Figur 2IV gezeigt, welche auch durch eine Betätigung der Scheibenwaschanlage nicht oder nicht vollständig beseitigt werden können.

Die Figuren 3 A-D zeigen hingegen die Wirkungsweise der Reinigung des erfindungsgemäßen Scheibenwischers. Das intakte Wischblatt reinigt gemäß Figur 3A in zweidimensionaler Wischrichtung, wodurch sich die In Figur 3B gezeigte zweidimensionale höhere Reinigungswirkung ergibt. Wenn das Wischblatt beschädigt ist, was in Figur 3C gezeigt ist, so bleibt aufgrund der erfindungsgemäßen Ausgestaltung des Scheibenwischers und des Verfahrens trotzdem die zweidimensionale Reinigungswirkung voll erhalten, es können sich keine Schlieren bilden, was aus den Figuren 3C und 3D hervorgeht.

Gewerbliche Anwendbarkeit: Die Erfindung ist insbesondere in der Automobilindustrie gewerblich anwendbar. Ihre besondere Nützlichkeit besteht darin, dass zum einen eine erhöhte Reinigungsleistung des Scheibenwischers gegeben ist und auch ein beschädigtes Wischerblatt zu einer vollen Reinigung einer Frontscheibe ohne Schlierenbildung führt.

## Patentansprüche

1. Scheibenwischer mit zwei überlagerten Wischbewegungen, bestehend aus wenigstens einem Wischerarm, welcher an einem Ende mit einem motorischen Antrieb verbunden ist, welcher dem Wischerarm eine im Wesentlichen hin- und hergehende oder rotatorische oder elliptische oder sonstwie zyklische erste Bewegung aufprägt und mit wenigstens einem Haltegestänge, welches am anderen Ende des Wischerarms beweglich befestigt ist und wenigstens ein Wischblatt trägt, welches eine zusätzliche zweite Bewegung ausführt,
**dadurch gekennzeichnet,**
**dass** der Wischerarm aus einer unteren, mit dem motorischen Antrieb (2) verbundene Stange (1) und einer oberen, das Haltegestänge (4) mit Wischblatt tragende Stange (3) besteht, wobei die einander benachbarten Enden der Stangen (1,3) in einem Verbindungsglied (5) gehaltert sind, welches einerseits fest mit dem Ende der unteren Stange (1) verbunden ist und andererseits das Ende der oberen Stange (3) beweglich haltert, wobei das Verbindungsglied (5) die Bewegung der unteren Stange (1) auf die obere Stange (3) zu übertragen imstande ist, erste Bewegung des Wischblattes, und das Verbindungsglied (5) eine Antriebseinheit (7) aufweist, welche gleichzeitig der oberen Stange (3) eine im Wesentlichen vor und zurück verlaufende zweite Bewegung aufzuprägen imstande ist, welche beiden Bewegungen sich überlagern, jedoch voneinander unabhängig sind.

2. Scheibenwischer nach Anspruch 1, **dadurch gekennzeichnet,**
**dass** die zweite Bewegung der oberen Stange (3) und somit auch des Wischblattes eine Longitudinalbewegung ist, deren translatorischer Weg gleich oder kleiner als die Breite der im Betrieb des Scheibenwischers hin und her kippenden Gummilippe des Wischblattes ist.

3. Scheibenwischer nach Anspruch 1 oder 2,
**dadurch gekennzeichnet, dass** die Amplitude und/oder die Frequenz der zweiten Bewegung, Longitudinalbewegung, veränderbar, zum Beispiel steuerbar oder regelbar, ist.

4. Scheibenwischer nach Anspruch 1 oder 2 oder 3, **dadurch gekennzeichnet,**
**dass** die Antriebseinheit des Verbindungsgliedes (5) wenigstens einen Piezokristall (7) aufweist, welcher durch Zuführen von elektrischer Energie mechanische Schwingungen auszuführen imstande ist, welche als zweite Bewegung auf die obere Stange (3) übertragbar sind.

5. Scheibenwischer nach Anspruch 1 oder 2 oder 3, **dadurch gekennzeichnet,**
**dass** die Antriebseinheit des Verbindungsgliedes (5) eine Mehrzahl von hintereinander bzw. in Reihe geschalteten, elektrisch zu mechanischen Schwingungen anregbare Piezokristallen (7) aufweist, welche die mechanischen Schwingungen als zweite Bewegung auf die obere Stange (3) übertragen.

6. Scheibenwischer nach Anspruch 1 oder 2 oder 3, **dadurch gekennzeichnet,**
**dass** die Antriebseinheit eine von einer Wechselspannung beaufschlagte Spule ist, welche die obere Stange in die zweite Bewegung versetzt.

7. Scheibenwischer nach Anspruch 6, **dadurch gekennzeichnet,**
**dass** die Spule Teil eines elektromagnetischen Schwingkreises ist, dessen erzwungene elektrische Schwingungen entweder unterhalb oder oberhalb der Resonanzfrequenz des Schwingkreises liegen.

8. Scheibenwischer nach Anspruch 1 oder 2 oder 3, **dadurch gekennzeichnet,**
**dass** die Antriebseinheit ein Masse-Federsystem ist, welches durch die erste Bewegung in Schwingungen versetzt wird und diese Schwingungen als die zweite Bewegung auf die obere Stange überträgt.

9. Scheibenwischer nach Anspruch 8, **dadurch gekennzeichnet,**
**dass** die obere Stange mitsamt dem Haltegestänge und dem Wischblatt Teil des Masse-Federsystems sind und dasselbe in der Resonanzfrequenz des Masse-Federsystems schwingt.

10. Scheibenwischer nach Anspruch 1 oder 2, **dadurch gekennzeichnet,**
**dass** die Antriebseinheit des Verbindungsgliedes eine Exzenterscheibe mit einem eigenen Motor aufweist, welche Exzenterscheibe die obere Stange in die zweite Bewegung zu versetzen imstande ist.

11. Scheibenwischer nach einem der Ansprüche 6 bis 9, **dadurch gekennzeichnet, dass** die Antriebseinheit des Verbindungsgliedes aus einer Kombination aus einem Masse-Federsystem und einer mit einer Wechselspannung beaufschlagten Spule besteht.

12. Verfahren zur Bewegung eines Scheibenwischers mittels zweier überlagerter Wischbewegungen, unter Verwendung wenigstens eines Wischerarmes, welcher an einem Ende mit einem motorischen Antrieb verbunden ist, welcher dem Wischerarm eine im Wesentlichen hin- und hergehende oder rotatorische oder elliptische oder sonstwie zyklische erste Bewegung aufprägt und wenigstens eines Hattegestänges, welches am anderen Ende des Wischerarms beweglich befestigt ist und wenigstens ein Wischblatt trägt, welches eine zusätzliche zweite Bewegung ausführt,
**dadurch gekennzeichnet,**
**dass** der Wischerarm aus einer unteren, mit dem motorischen Antrieb verbundene Stange und einer oberen, das Haltegestänge mit Wischblatt tragende Stange besteht, wobei die einander benachbarten Enden der Stangen in einem Verbindungsglied gehaltert sind, welches einerseits fest mit dem Ende der unteren Stange verbunden ist und andererseits das Ende der oberen Stange beweglich haltert, wobei das Verbindungsglied die Bewegung der unteren Stange auf die obere Stange überträgt, erste Bewegung des Wischblattes, und das Verbindungsglied eine Antriebseinheit aufweist, welche gleichzeitig der oberen Stange und somit auch dem Wischblatt eine im Wesentlichen vor und zurück verlaufende zweite Bewegung, Longitudinalbewegung, aufprägt, welche beiden Bewegungen sich überlagern, aber unabhängig voneinander ausgeführt werden.

13. Scheibenwischer nach einem der vorherigen Ansprüche,
**dadurch gekennzeichnet**, das die vor und zurück verlaufende zweite Bewegung eine translatorische Bewegung ist, deren Weg bis zu 5 mm, vorzugsweise bis zu 2 mm, insbesondere bis zu 1 mm, beträgt.
